# EUROPEAN PATENT APPLICATION

(11) **EP 1 232 965 A1**
(43) Date of publication of application: **21.08.2002**
(21) Application number: 01830051.7
(22) Date of filing: 26.01.2001
(51) Int. Cl.: B65G 17/08, B65G 23/04, B65G 23/06

(54) **Wheel for conveyor with jointed elements for conveying materials**

(71) Applicant: Rexnord Marbett S.p.A., 42015 Correggio (Reggio Emilia) (IT)
(72) Inventor: Andreoli, Andrea, 41010 Villanova - Modena (IT)
(74) Representative: Simino, Massimo

(57) **Abstract**

Wheel (14) for conveyor (18) composed of jointed elements (19) for conveying materials, comprising a peripheral surface engaging functionally with the conveyor (18) and having radial teeth (15) and depressions (16) formed between pairs of adjacent teeth, as well as inserts (17) of sound-damping material positioned in the said depressions (16), at the bottom thereof, the said inserts coming into physical contact with the conveyor (18) during operation. By this means the noise produced by the impact between the conveyor (18) and the wheel (14) is eliminated.

## Description

The present invention relates to a wheel for a jointed conveyor for conveying materials, comprising a peripheral surface engaging functionally with the conveyor.

As is known, wheels for driving jointed conveyors for conveying materials are fundamentally of the pulley type, with a continuous functional surface in engagement with the opposing surface of the conveyor itself, or of the type having radially projecting teeth forming depressions which receive the hinge pins of the various constituent elements of the jointed conveyor.

Whereas the pulley type of wheel is used in practice only as an idle wheel on a fixed spindle for the return of the jointed conveyor, the type with teeth and depressions is preferably used to transmit to the conveyor the power taken from the shaft on which the wheel is mounted, although its use as a return or guiding or tensioning member is not to be ruled out.

In accordance with the prior art, the wheels and jointed-element conveyors of the type indicated above are made of metallic or plastic materials which, as they come into contact with one another during the movement, generate a large amount of noise as they knock together.

In the particular case of materials conveying, as for example in packaging businesses or in appliance assembly lines, the presence of numerous conveyors of the above type generates a large aggregate amount of environmental noise which can cause sometimes permanent problems for operators present in the work environment.

The object of the present invention is therefore to eliminate or at least greatly reduce the amount of noise generated by materials conveying systems.

This and other objects which will become clear in the course of the following description are achieved with the wheel for jointed-element conveyors in accordance with the accompanying claims.

The invention will now be described in greater detail with reference to a number of practical examples of embodiments. These examples are given purely by way of non-limiting indication and are illustrated in the accompanying drawings, in which:
Figure 1 is a perspective view of a wheel with a continuous peripheral surface intended for functional engagement and having annular sound-damping inserts according to the invention;
Figure 2 is a cross section through the wheel shown in Figure 1 taken on II-II;
Figure 3 is a perspective view of a wheel in which the functionally engaging peripheral surface has radial teeth and depressions and annular sound-damping inserts according to the invention;
Figure 4 is a cross section through the wheel shown in Figure 3 taken on IV-IV;
Figure 5 is a perspective view of a wheel in which the functionally engaging peripheral surface has radial teeth and depressions and sound-damping inserts in the form of thin blocks;
Figure 6 is a cross section through the wheel shown in Figure 5 taken on VI-VI; and
Figure 7 is a cross section showing the coupling between a length of conveyor composed of jointed elements and a wheel with a functionally engaging peripheral surface having radial teeth and depressions and sound-damping inserts in the form of thin blocks.

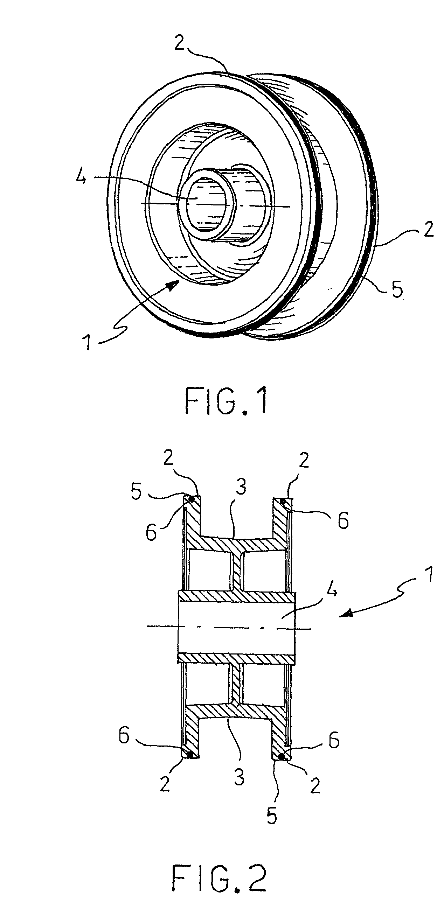

Referring to the aforesaid figures and in particular Figures 1 and 2, the number 1 is a general reference for a wheel whose peripheral surface for functional engagement with a conveyor is marked 2.

In the example shown in Figure 1 the wheel has a peripheral groove, marked 3, the functional surface 2 therefore being positioned on either side of this.

The wheel 1 has a conventional hub 4 for idle mounting on a shaft (not shown) which, for the particular type of wheel illustrated, is normally fixed.

In accordance with the invention, the peripheral surface engaging functionally with the jointed conveyor comprises two annular elements marked 5, each housed a respective groove 6.

The depth of the grooves 6 is less than the radial thickness of the annular elements housed in them to enable them to project partially from the surface 2, and it is these that come into contact with the conveyor as it wraps around the wheel.

The annular elements 5, which may also be toroidal in form, that is with a circular cross section, are made of a sound-damping material, particularly an elastomeric material such as natural or synthetic rubber.

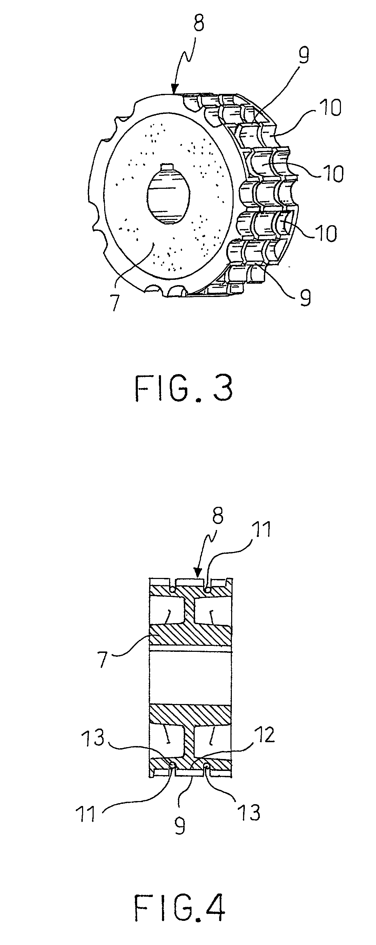

With reference to the example illustrated in Figures 3 and 4, the wheel 7 is of the type in which the peripheral surface 8 that engages functionally with the conveyor has radial teeth 9, and depressions 10 between pairs of adjacent teeth.

The peripheral surface 8 has grooves 11 passing radially through the teeth 9 and the bottom 12 of the depressions 10.

Placed in the said grooves 11 are annular elements 13 made of a sound-damping material, particularly an elastomeric material such as natural or synthetic rubber.

The depth of the grooves 11 below the bottom 12 of the depressions 10 is such as to be less than the radial thickness of the annular elements 13 or of the diameter of their cross section if they are toroidal.

In this way a part of each annular element 13 projects radially above the bottom 12 of the depressions 10 to provide sound-damping contact with the conveyor.

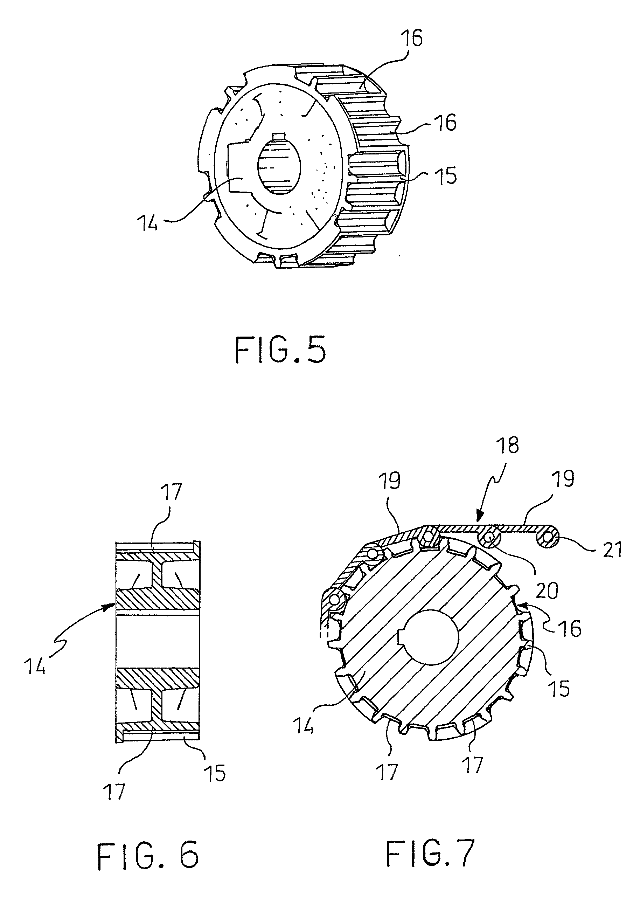

Referring to the example shown in Figures 5 and 6, these illustrate a wheel 14 with teeth 15 and depressions 16, like the wheel 7 of Figures 3 and 4, in which the sound-damping elements consist of thin blocks 17 positioned in the depressions 16 and fixed by conventional means, such as adhesives, to the bottoms of the said depressions.

The abovementioned blocks 17, which extend laterally at least a short way up the flanks of the teeth 15, are made of a sound-damping material, particularly an elastomeric material, e.g. natural or synthetic rubber.

Referring to Figure 7, it will be observed that a wheel, for example such as the wheel 14 of Figures 5 and 6, engages with a conveyor 18 composed of flat elements 19 hinged to each other by pins 20 and slots 21, as is conventional in this specific technological sector.

It can be seen that the impact between the conveyor 19 and the wheel 14 takes place, in the slots 21, on the sound-damping blocks 17 placed in the bottoms of the depressions 16.

The operation of the wheels 1 and 7 is much the same, the impact between the conveyor 18 and the functionally engaging peripheral surface occurring on the annular elements 5 and 13, respectively.

The absorption of the kinetic energy of the impact into the annular elements 5, 13 or into the blocks 17, which are made of an elastomeric material, reduces the production of vibrations and hence the generation of noise during operation of the conveyor.

The dimensions, materials and type of wheels used to drive the conveyors can of course be varied to suit user requirements without departing from the scope of the present invention as described above and as claimed below.

## Claims

1. Wheel for conveyor (18) composed of jointed elements (19) for conveying materials, comprising a peripheral surface (2, 8) engaging functionally with the conveyor (18), **characterized in that** at least part of the said surface is provided with inserts (5, 13, 17) of sound-damping material, the said inserts being in physical contact with the conveyor (18).

2. Wheel according to Claim 1, **characterized in that** the said peripheral surface (2) engaging functionally with the conveyor (18) is continuous and the said inserts of sound-damping material consist of at least one annular element (5) that runs circumferentially around the said peripheral surface.

3. Wheel according to Claim 2, **characterized in that** it comprises a pair of annular elements (5) side by side and axially separate from each other, each of the said annular elements (5) being housed in its own circumferential groove (6) formed in the said surface.

4. Wheel according to Claim 1, **characterized in that** said peripheral surface engaging functionally with the conveyor has radial teeth (15) and depressions (16) between pairs of adjacent teeth and **in that** the said inserts (17) of sound-damping material are positioned in the said depressions (16), at the bottom thereof.

5. Wheel according to Claim 4, **characterized in that** the said inserts (17) of sound-damping material extend also over at least a portion of the flank of at least one of the pairs of adjacent teeth (15) that define the said depressions (16).

6. Wheel according to Claims 4 and 5, **characterized in that** the said inserts (17) of sound-damping material consist of blocks placed parallel to the axis of rotation of the wheel.

7. Wheel according to Claim 4, **characterized in that** the said inserts consist of at least one annular element (13) running circumferentially around the said peripheral surface for functional engagement with the conveyor, the said annular element (13) being housed in a corresponding circumferential groove (11) passing radially through the said teeth (9) and below the bottoms (12) of the depressions (10) present between the pairs of teeth (9).

8. Wheel according to Claim 7, **characterized in that** it comprises a pair of the said annular elements (13) positioned side by side and axially separate from each other.

9. Wheel according to Claims 1 to 8, **characterized in that** the sound-damping material of the said inserts is an elastomeric material such as natural and/or synthetic rubber.
